# EUROPEAN PATENT SPECIFICATION

(11) **EP 1 655 159 B1**
(45) Date of publication and mention of the grant of the patent: **19.12.2007**
(21) Application number: 04425821.8
(22) Date of filing: 03.11.2004
(51) Int. Cl.: B60G 21/045, B60G 11/22, F16F 1/38, F16F 1/50, F16F 3/087

(54) **Suspension system with longitudinal interconnection for a vehicle**
Fahrzeugaufhängungssystem mit längs miteinander verbundenen Aufhängungen
Système de suspension à interconnexion longitudinale pour un véhicule

(43) Date of publication of application: 10.05.2006
(73) Proprietor: C.R.F. SOCIETA' CONSORTILE PER AZIONI, 10043 Orbassano (Torino) (IT)
(72) Inventor: Asteggiano, Valter, C.R.F. Socièta Consortile, 10043 Orbassano Torino (IT); Sandri, Silvano, C.R.F. Socièta Consortile, 10043 Orbassano Torino (IT)
(74) Representative: Gallarotti, Franco

(56) References cited:
- EP-A- 0 407 075
- FR-A- 1 141 188
- FR-A- 1 185 434
- FR-A- 2 677 723
- FR-E- 89 150
- GB-A- 1 212 493
- GB-A- 2 259 747
- OA-A- 101
- US-A- 2 411 885
- US-A- 2 702 194

## Description

The present invention relates to a system of suspensions with longitudinal interconnection for a vehicle.

In systems of the type referred to, the suspensions of the front and rear wheels on one and the same side of the vehicle each comprise a respective oscillating arm, which is usually longitudinal, and the two oscillating arms are operatively interconnected.

For the above purpose, connected to each oscillating arm is the first end of a respective longitudinal member, for example, in the form of a rod. The second ends of the two longitudinal members are then operatively connected to one another via interposition of a system of helical springs contained in a casing that is rendered fixed to the body of the vehicle. The system of springs is devised to enable transfer, in a controlled way, of the axial displacement of one longitudinal member, due to the movement of the respective suspension, to the other longitudinal member, and hence to the suspension associated to the latter, with the consequence that a load resulting from the movement of one suspension is transmitted to the other suspension of the same side of the vehicle.

Said system enables setting an optimal rigidity for various types of, movement that the body of the vehicle can make, and in particular the purely vertical movements, i.e., *bouncing,* and the movements of *pitching.*

The systems referred to above, which have been widely used in the past, are of complex construction and cumbersome, and are characterized by phenomena of hysteresis due to the characteristics proper to the springs that constitute the main element of the system used for transferring a load between the suspensions of two wheels of one and the same side of the vehicle.

System of the above mentioned type are disclosed, for instance, by OA-A-101, upon which the preamble of claim 1 is based, as well as EP-A-0 407 075 and FR-A-2.185.434. From FR-E-89.150 a system of suspensions with longitudinal interconnection is also known, based on the use of two torsion bars for each side of the vehicle body, each bar having an end thereof connected to a respective suspension, whereas the other ends of the two bars are connected to each other by means of a inversion mechanism, including four bevel wheels and a respective casing which is pivotally linked to the vehicle's body. As a specific improvement of this interconnection system, FR-E-89 150 proposes to interconnect also the cited casings in a direction transverse to the longitudinal direction the vehicle's body.

In the light of what is set forth above, the purpose of the present invention is to provide a new system of suspensions with longitudinal interconnection that is distinguished by a considerable constructional simplicity, by compact dimensions and contained weights, and in which the aforesaid phenomena of hysteresis are prevented.

According to the present invention, said purpose is achieved thanks to a system of suspensions with longitudinal interconnection for a vehicle having the characteristics recalled specifically in the annexed claims, which constitute an integral part of the descriptive content of the present application.

Further purposes, characteristics and advantages of the present invention will emerge clearly from the ensuing detailed description and from the annexed plate of drawings, which are provided purely by way of explanatory and non-limiting example and in which:
- Figure 1 is a schematic view from beneath of a vehicle equipped with a system of suspensions according to the invention;
- Figure 2 is a schematic side view of a part of the vehicle of Figure 1;
- Figure 3 is a schematic perspective view of a part of the system according to the invention;
- Figure 4 is a schematic perspective view of an interconnection device for the system according to the invention;
- Figure 5 is a schematic cross-sectional view of a first component of the device of Figure 4;
- Figure 6 is a schematic perspective view of a second component of the device of Figure 4;
- Figure 7 is an exploded schematic perspective view of a third component of the device of Figure 4;
- Figure 8 is a schematic cross-sectional view of the device of Figure 4;
- Figure 9 is a schematic cross-sectional view of an interconnection device in accordance with a first variant of the invention;
- Figure 10 is a schematic cross-sectional view of an interconnection device in accordance with a second variant of the invention;
- Figure 11 is a schematic cross-sectional view of an interconnection device in accordance with a third variant of the invention; and
- Figure 12 is a schematic view, in partial cross section, of a part of the system according to the invention, in accordance with a further embodiment.

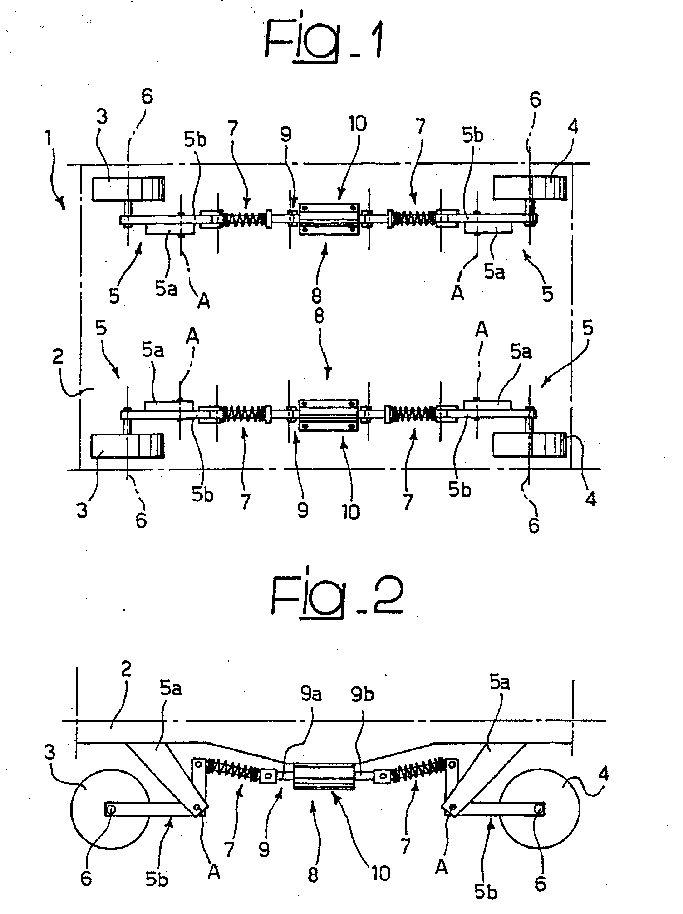

In Figures 1 and 2, the reference number 1. designates, as a whole, a four-wheel vehicle, and in particular a motor vehicle of small dimensions for urban transport, of the type with small wheelbase and high centre of gravity.

The vehicle 1 comprises a body 2, to which there are associated, at the bottom, two front wheels 3 and two rear wheels 4. Each wheel 3, 4 is associated to the body 2 by means of a respective oscillating assembly 5, comprising a bracket 5a, fixed to the body 2, to which there is hinged a longitudinal suspension arm 5b, which can rotate about a respective substantially horizontal axis A. The brackets 5a of one and the same side of the vehicle 1 are preferably inclined towards one another.

Associated to a first end of each suspension arm 5b is the hub of a respective wheel 3, 4, which can rotate about an axis 6. Pivoted at the other end of the same arm 5b is a springing/damping assembly, designated by 7.

The springing/dainping assemblies 7 associated to the suspension arms 5b of the front wheel 3 and rear wheel 4 of one and the same side of the vehicle 1 are connected to one another by means of an interconnection device, made according to the invention, designated as a whole by 8.

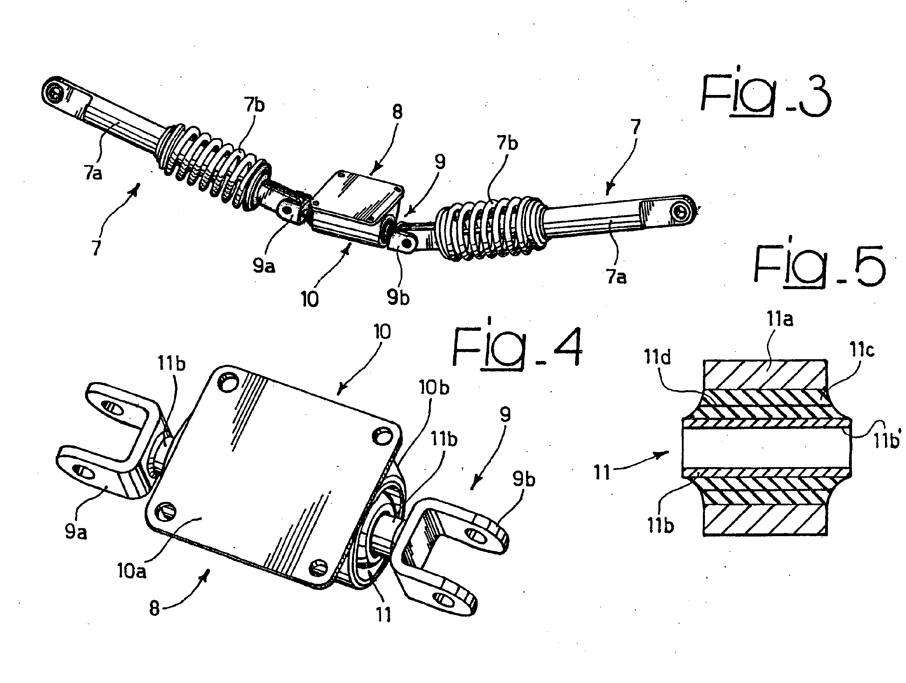

According to the invention, and as may be seen also in Figures 3 and 4, the aforesaid device 8 comprises an axially extending rigid member 9, which traverses longitudinally a respective support 10 fixed to the body 2. In the case exemplified, the rigid member 9 is configured as a metal rod 9 and is connected elastically to the support 10 via a yielding element 11, described hereinafter, formed at least in part with elastic material.

Each end of the rod 9 is in turn articulated, via a pin, to a respective springing/damping assembly 7. Preferably, the assemblies 7 each comprise a cylinder-type shock absorber 7a with a coaxial helical spring 7b operating in compression, as may be seen in Figure 3.

The element 11 used for the elastic connection of the rod 9 to the support 10, represented schematically in Figure 5, has a shape that is, as a whole, that of a cylindrical bushing and is made of metal and a suitable elastic material. The element 11 comprises, for said purpose, an outer body and an inner body that are substantially tubular and are designated, respectively, by 11a and 11b, said bodies being rendered fixed to one another by means of an intermediate layer of elastic material 11c, such as, for example, a vulcanized rubber or an elastomer. The bodies 11a and 11b are both substantially tubular, made of a metal material, and are set substantially coaxial with respect to one another. In the case exemplified, the axial development of the inner body 11b is greater than that of the outer body 11a. Preferably, moreover, between the bodies 11a and 11b there is further provided at least one intermediate metal tubular layer, designated by 11d in the figures.

Irrespective of the presence or the number of intermediate layers 11d, the element 11 provides a bushing, which is rigid in the radial direction and is flexible in the axial direction. It is to be noted that various types of commercially available bushings and used for other purposes have a structure and characteristics of operation of the same type as the ones indicated for the element 11.

The support 10, which may be seen in Figure 6, is preferably made of metal material and comprises a flange portion 10a for fixing to the body 2 and a tubular portion 10b for housing the element 11.

The outer body 11a of the element 11 is rendered fixed to the support 10 via a mechanical interference fit in the axial cavity 10b' of the tubular portion 10b. The rod 9 is then rendered fixed to the inner body 11b of the element 11.

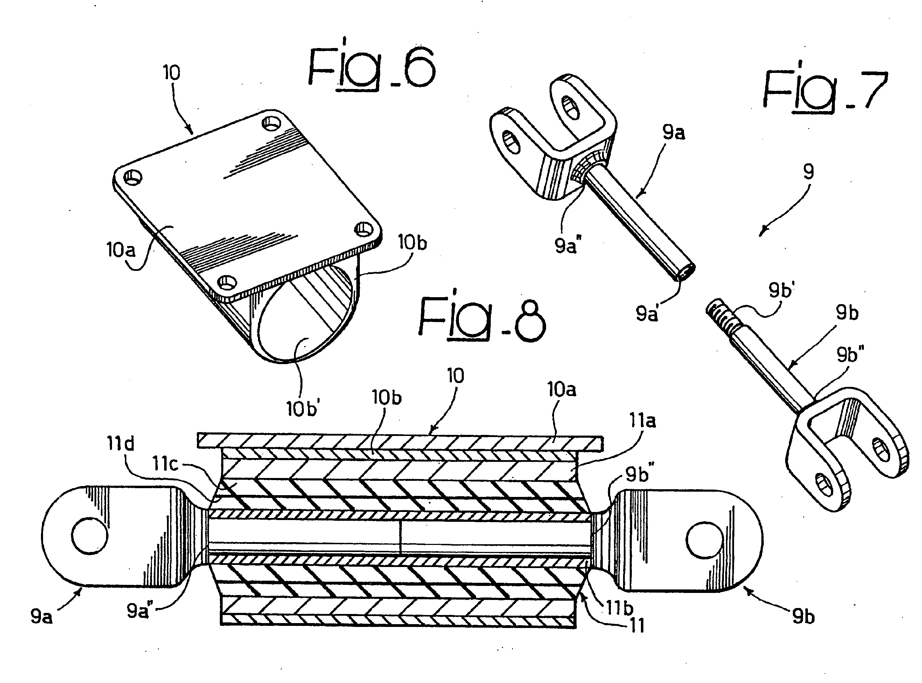

For said purpose, in the preferred embodiment of the invention, the rod 9 is built in two distinct metal parts, designated by 9a and 9b in Figure 7, which may be rigidly connected to one another. In the case exemplified, there is provided for said purpose a coupling of the internal thread-external thread type, and hence one end of the rod part 9a has an axial hole provided with an internal thread 9a', whilst the homologous end of the rod part 9b has a portion with reduced diameter, provided with an external thread 9b'. On the opposite side, each rod part 9a, 9b has a portion shaped to define a respective contrast surface 9a", 9b", designed to co-operate with the inner body 11b of the element 11.

For the purposes of coupling between the rod 9 and the element 11, the rod parts 9a, 9b are coupled to one another, within the axial cavity 11b' (see Figure 5) of the inner body 11b of the element 11, by means of the aforesaid internal thread-external thread connection. The rod parts 9a, 9b are tightened to one another to get the surfaces 9a", 9b" to come into contrast each on a respective end of the inner body 11b, as may be seen in Figure 8. By applying the due tightening torque there is thus ensured rigid connection of the rod 9 as a whole to the inner body 11b, and hence to the element 11, which has been previously rendered fixed to the support 10 via an interference fit. The fact that the parts 9a, 9b are each connected to an assembly 7 prevents any slackening between the parts themselves.

The ends of the rod parts 9a, 9b opposite to the ones in which there are defined the internal thread 9a' or the external thread 9b' have a respective portion for coupling to the corresponding suspension/damping assembly 7. In the case exemplified, said coupling portion is fork-shaped in order to receive the corresponding end of an assembly 7 equipped with a slot. Obviously, a reverse arrangement is possible, i.e., with a fork-shaped portion formed at the end of the assembly 7 and a slot present at the respective end of the rod 9. Conveniently, in the case exemplified, the base of the aforesaid fork has a tapered portion defining the aforesaid contrast surface 9a", 9b".

As a result of the arrangement described, the oscillating assemblies 5 of one and the same side of the vehicle 1 are interconnected longitudinally to one another, since the respective assemblies 7 are connected to the two ends of the rigid rod 9, the latter being in turn elastically fixed to the support 10. The load deriving from the movement of a suspension 5, due to the substantially vertical movement of the respective wheel, can thus be transmitted in a controlled way to the other suspension, and hence to the other wheel of the same side of the vehicle 1.

By means of the system according to the invention there are rendered possible axial displacements of the rigid rod 9, typically in the region of a centimetre, through the deformation alone of the elastic material 11c, in the absence of any sliding and friction between the components, and hence without any wear thereof. The system likewise enables prevention of phenomena of hysteresis, typical of spring devices according to the known art, which have negative effects on the behaviour the system of suspensions.

The rigidity of the rubber 11c or other elastic material used will obviously be designed so as to control the point of interconnection between the front axle and the rear axle of the vehicle 1. It is to be noted that the interconnection device 8 described is normally loaded also in static conditions by two opposed forces, due to the weight of the vehicle 1, which are normally of a different intensity (for example, on account of the weight of the engine, which can be in the front part or else in the rear part of the vehicle). The fact that said forces are different from one another could determine a longitudinal displacement of the rod 9 even under static conditions of the system. The balancing of said aspect, at the level of the device 8, can be managed by means of the provision of pre-loaded elements or bushings 11 (for example using bushings 11 in which, in the unloaded condition, the internal reinforcement 11b is not aligned to the external reinforcement 11a).

The system of suspensions with longitudinal interconnection according to the invention is particularly advantageous for use on automobiles with small wheelbases for urban use, in so far as it enables effective control of the movements of pitching, which in said type of vehicles are normally accentuated (for example, when passing over the artificial humps normally provided on urban roads for the purpose of limiting speed).

Finally, the system described proves to be of simple construction, and hence easy to maintain and repair, when necessary, as well as presenting limited overall dimensions and weight.

In a possible variant, for the purpose of rendering the rod 9 elastically fixed to the support 10 there could be provided two or more distinct elements 11. Such an embodiment is illustrated schematically in Figure 9. As may be noted, in this case two elements 11, obtained as described previously, are set in series within the support 10, being interference-fitted in the tubular portion 10b of the support itself, on opposite sides of the latter. In said embodiment, the surfaces 9a", 9b" of the rod 9 each operate in contrast on the outer end of the body 11b of a respective element 11. In the case exemplified, the two elements 11 are not in mutual contact; i.e., they are set at a distance apart from one another in the longitudinal direction of the tubular portion 10b.

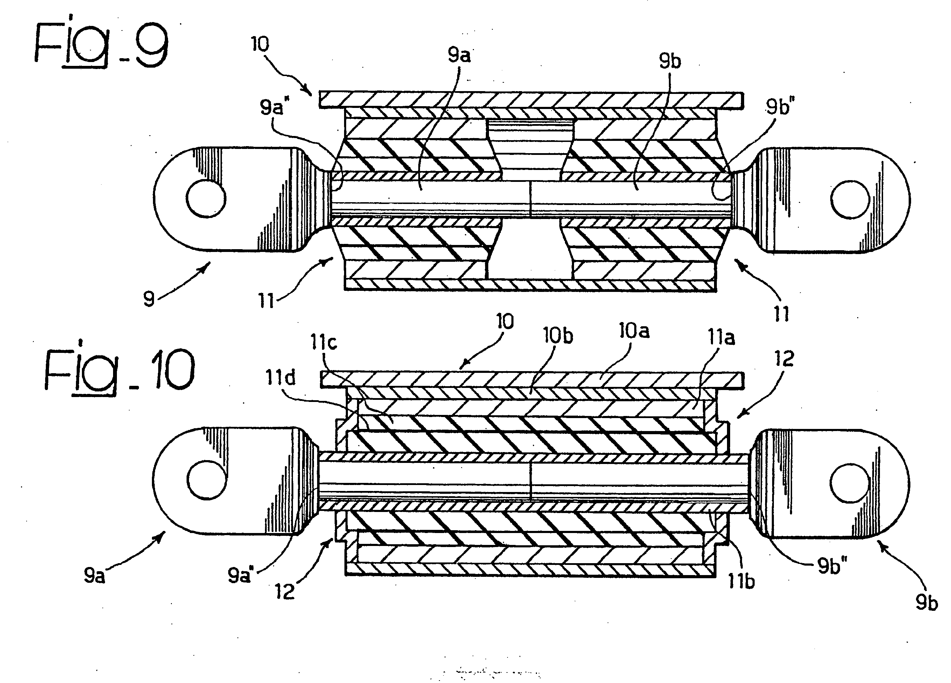

In another variant, represented schematically in Figure 10, the tubular portion 10b is equipped, at each longitudinal end, with a respective lid, designated by 12. Each lid 12, which is, for example, fixed with an internal thread-external thread connection to the tubular portion 10b, is provided with a central hole, through which there projects a respective end stretch of the inner body 11b of the element 11. Such an arrangement enables precise guiding, if so desired, of the axial movement of the rod 9.

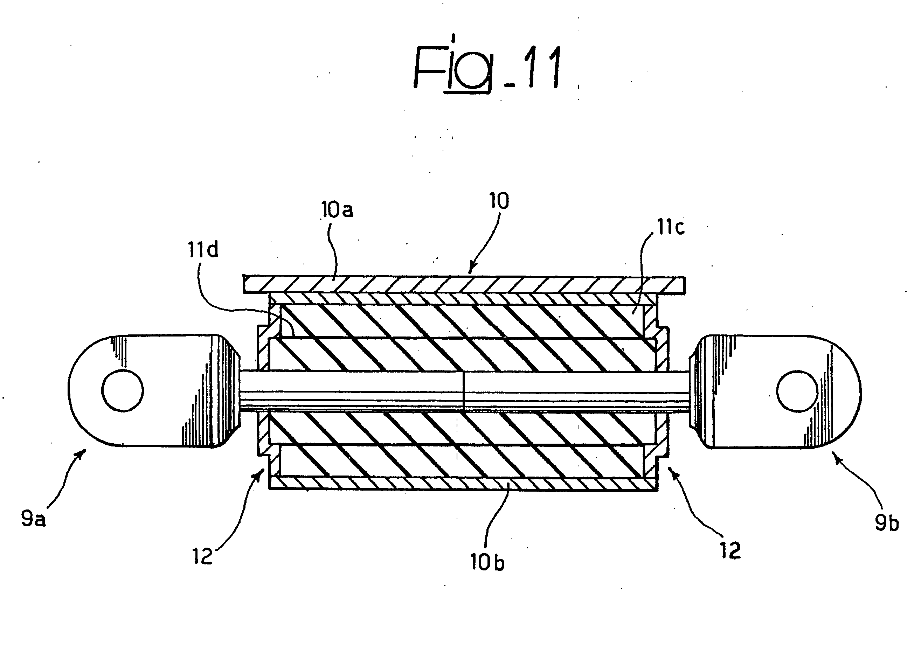

In accordance with a further variant, the element 11 could be without the outer body 11a, in which case the rubber 11c would be vulcanized directly between the support 10 and the inner body 11b. Another possibility is to omit the element 11, as illustrated schematically in Figure 11. As may be noted, in this case, the rod is conceived as being of a single piece, which is rendered directly fixed to the support 10 via a layer of rubber 11c, vulcanized between the rod itself and the support, with a possible intermediate metal layer 11d. The rod 9 and/or the portion 10b of the support 10 could be equipped with surface recesses or reliefs in order to guarantee the grip of the elastic material 11c.

In the case exemplified in Figure 11 there are further provided the guide lids 12, through which the rod 9 projects directly at the two longitudinal ends of the support 10.

Of course, without prejudice to the principle of the invention, the details of construction and the embodiments may vary with respect to what is described and illustrated herein purely by way of example. It is pointed out, in particular, that the dimensions and the proportions between the components illustrated in the figures are provided purely by way of explanatory example, and that they may vary according to the needs in the practical embodiment of the invention.

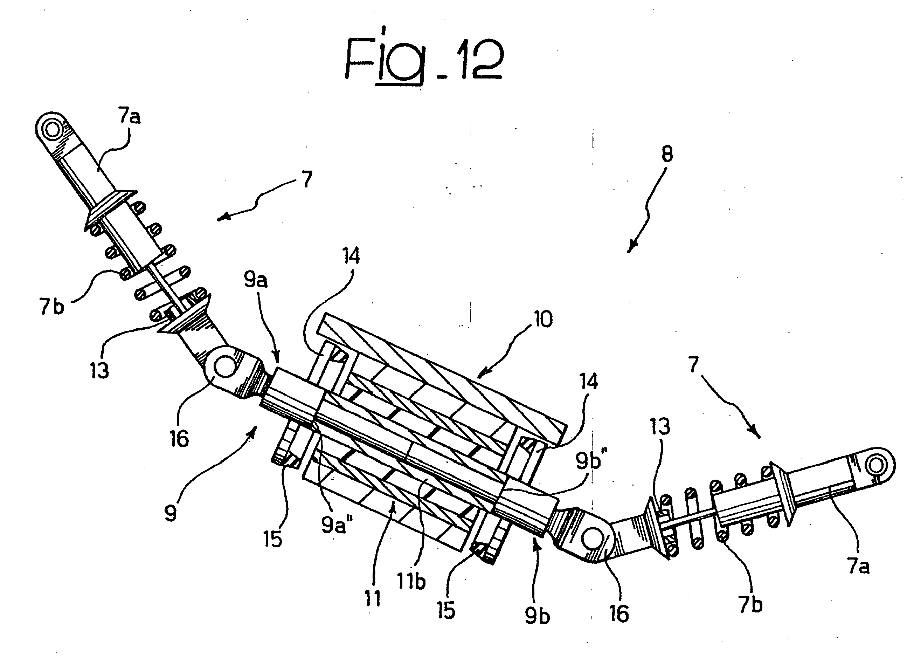

Figure 12 illustrates a schematic view of a further possible embodiment of the invention. As is known, the maximum limit of the angular stroke of the oscillating arms of a suspension is determined by purposely provided end-of-travel elements, known as bump stops, usually in the form of buffers made of elastic material fixed to the body of the vehicle. In the event of maximum oscillation of a suspension arm, a stretch of the latter comes into contact with a respective bump stop, which functions as a shock absorber, in so far as it is made of rubber or a similar elastic material.

In the embodiment of the invention illustrated in Figure 12, the aforesaid elements or bump stops are integrated in the respective springing/damping assemblies 7, instead of being fixed to the body 2 of the vehicle. In the case exemplified, the elastic buffers, designated by 13, have a substantially annular shape and are fixed to the terminal of the respective assembly 7, to which the stem of the cylinder 7a is connected. In this way, the limit to the angular stroke of a respective suspension arm 5b (see Figure 1 or Figure 2) is determined by the contact between the end of the cylinder 7a, from which the stem project and the buffer 13.

In the case exemplified, the two rod parts 9a, 9b are preferably each equipped, in the area that remains on the outside of the support 10, with a circular flange 14, bearing a respective elastic element or buffer 15, for example, made of rubber or elastomer. The buffers 15, for example, having an annular shape, are such as can enter into contact with a respective end of the support 10, or rather of its tubular portion 10b, so as to limit the axial stroke allowed to the rod itself. The presence of the end-of-travel means formed by the flanges 14 with their respective buffers 15 enables prevention of any particularly violent impact between the parts 7a and 13 of a springing/damping assembly 7 from resulting in excessive axial movements of the rod 9.

In the case of the embodiment of Figure 12, moreover, the portions of the rod 9 for coupling to a corresponding suspension/damping assembly 7 are configured as components distinct from the rod parts 9a, 9b. In the case exemplified, said coupling portions, designated by 16, are fork-shaped, and rendered fixed to the respective rod part 9a, 9b via a coupling of the internal thread-external thread type. Alternatively, the portions 16 could be of the type with slots, for coupling to assemblies 7 provided with fork-shaped end portions.

## Claims

1. A system of suspensions for a vehicle (1), particularly of small dimensions and with small wheelbase for urban transport, having a body (2) and four wheels (3, 4) associated to the body (2), the system of suspensions comprising:
- an oscillating assembly (5) for each wheel (3, 4), each assembly (5) enabling the respective wheel (3, 4) to perform a substantially vertical movement with respect to the body (2); and
- an interconnection device (8), which connects to one another the assemblies (5) of the front wheel (3) and rear wheel (4) of one and the same side of the vehicle (1), the interconnection device (8) comprising at least one longitudinally extending, preferably rod-shaped, rigid member (9), at least one yielding component (11) and a respective support (10) connected to the body (2) of the vehicle (1),
wherein said at least one yielding component (11) is arranged for enabling controlled displacements of the rigid member (9), for the purpose of transmitting a load resulting from the movement of the oscillating assembly (5) of one of the wheels (3, 4) of one side of the vehicle (1) to the oscillating assembly (5) of the other wheel of the same side of the vehicle,
**characterized in that** said rigid member (9) is rendered fixed in one intermediate stretch thereof to said at least one yielding component (11) so as to avoid sliding and friction therebetween,
- said at least one yielding component (11) is in turn fixed to the respective support (10) so as to avoid sliding and friction therebetween, and
- said at least one yielding component (11) is formed at least partially with an elastic material (11c), such that said controlled displacements of the rigid member (9) are enabled via deformation of said elastic material (11c), in the absence of sliding and friction either between said rigid member (9) and said at least one yielding component (11) and between said at least one yielding component (11) and the respective support (10).

2. The system according to Claim 1, **characterized in that** the yielding element (11) has an axial cavity (11b'), in which a respective intermediate portion of the rigid member (9) is housed.

3. The system according to Claim 1, **characterized in that** the support (10) has an axial cavity (10b'), in which a respective portion of the yielding element (11) is housed.

4. The system according to Claim 2, **characterized in that** the axial cavity (11b') of the yielding element (11) is formed at least in part by a substantially tubular internal component (11b) made of rigid or metal material, which is surrounded by the elastic material (11c).

5. The system according to Claim 4, **characterized in that** the yielding element (11) comprises a substantially tubular peripheral component (11a) made of rigid or metal material, within which at least in part the internal component (11b) extends, the peripheral component (11a) being rendered fixed to the internal component (11b) via the elastic material (11c).

6. The system according to Claims 3 and 5, **characterized in that** the peripheral component (11a) of the yielding element (11) is interference fitted in the axial cavity (10b') of the support (10).

7. The system according to Claim 1, **characterized in that** the elastic material (11c) of the yielding element (11) extends between, and is in contact with, the support (10) and the rigid member (9).

8. The system according to Claim 1, **characterized in that** in the elastic material (11c) there is at least partially embedded an axially extended stiffening component (11d), particularly of a tubular shape and made of metal material.

9. The system according to Claim 1, **characterized in that** the yielding element (11) is structured for being more readily elastically deformable in the axial direction than in the radial direction.

10. The system according to Claim 1, **characterized in that** the rigid member (9) is rendered fixed to a plurality of yielding components (11), each formed at least partially with an elastic material (11c) and rendered fixed to the support (10).

11. The system according to Claim 1, **characterized in that** the rigid member (9) comprises at least one abutment surface (9a", 9b") co-operating with the yielding element (11) for the purposes of fixing the former to the latter.

12. The system according to Claim 1, **characterized in that** the rigid member (9) is formed in at least two parts (9a, 9b) coupled axially to one another, particularly by means of a coupling of an internal thread-external thread type (9a', 9b').

13. The system according to Claim 12, **characterized in that** each part (9a, 9b) of the rigid member (9) comprises an abutment surface (9a", 9b") co-operating with a respective longitudinal end of a rigid component (11b) of the yielding element (11).

14. The system according to at least Claim 1, **characterized in that** each end of the rigid member (9) is connected in an articulated way to a first end of a respective cylinder-type shock absorber (7a), preferably equipped with a coaxial helical spring (7b) operating in compression.

15. The system according to Claim 14, **characterized in that** the assembly (5) of each wheel (2, 3) comprises an oscillating arm (5b), to which a second end of a respective cylinder-type shock absorber (7a) is connected in an articulated way.

16. The system according to Claim 15, **characterized in that** there are provided end-of-travel means (13) of the movement of the oscillating arm (5b), integrated in the cylinder-type shock absorber (7).

17. The system according to Claim 1, **characterized in that** the rigid member (9) comprises respective end-of-travel means (14, 15), comprising in particular at least one portion of the rigid member (14) that supports an elastically deformable buffer element (15).

18. The system according to Claim 1, **characterized in that** associated to the support (10) are guide means (12) for guiding the axial movement of the rigid member (9) .

## Patentansprüche

1. System von Aufhängungen für ein Fahrzeug (1), insbesondere mit kleinen Abmessungen und mit kleiner Radbasis für städtischen Transport, zu dem ein Fahrzeugaufbau (2) und mit diesem verbundene vier Räder (3, 4) gehören, wobei das System der Aufhängungen umfasst:
- eine schwingende Baugruppe (5) für jedes Rad (3, 4), wobei jede Baugruppe (5) es ermöglicht, dass das betreffende Rad (3, 4) eine substantiell vertikale Bewegung in Bezug auf den Fahrzeugaufbau (2) ausführt; und
- ein Verbindungsglied (8), welches untereinander die Baugruppen (5) von Vorderrad (3) und Hinterrad (4) auf einer und der gleichen Seite des Fahrzeugs (1) verbindet, wobei das Verbindungsglied (8) wenigstens ein längs sich erstreckendes, vorzugsweise stabförmiges, starres Glied (9), wenigstens eine nachgiebige Komponente (11) und einen entsprechenden Träger (10), der mit dem Aufbau (2) des Fahrzeugs (1) verbunden ist, umfasst,
wobei die wenigstens eine nachgiebige Komponente (11) so angeordnet ist, um kontrollierte Verschiebungen des starren Glieds (9) zuzulassen für den Zweck einer zu übertragenden Belastung resultierend von der Bewegung der schwingenden Baugruppe (5) von einem der Räder (3, 4) auf einer Seite des Fahrzeugs (1) zu der schwingenden Baugruppe (5) des anderen Rades auf der gleichen Seite des Fahrzeugs,
**dadurch gekennzeichnet, dass** das starre Glied (9) festgehalten wird in einem dazwischenliegenden Abschnitt bezogen auf die wenigstens eine nachgiebige Komponente (11), um Gleiten und Reiben dazwischen zu vermeiden,
- die wenigstens eine nachgiebige Komponente (11) drehgesichert ist bezogen auf den entsprechenden Träger (10), um Gleiten und Reiben dazwischen zu vermeiden, und
- die wenigstens eine nachgiebige Komponente (11) wenigstens teilweise mit einem elastischen Material (11c) gebildet ist, so dass die kontrollierten Verschiebungen des starren Gliedes (9) ermöglicht werden über die Deformation des elastischen Materials (11c), ohne dass Gleiten und Reiben zwischen dem starren Glied (9) und der wenigstens einen nachgiebigen Komponente (11) und zwischen der wenigstens einen nachgiebigen Komponente (11) und dem entsprechenden Träger (10) vorliegt.

2. System nach Anspruch 1, **dadurch gekennzeichnet, dass** das nachgiebige Element (11) eine axiale Aussparung (11b') hat, in welcher ein entsprechender dazwischenliegender Abschnitt des starren Gliedes (9) untergebracht ist.

3. System nach Anspruch 1, **dadurch gekennzeichnet, dass** der Träger (10) eine axiale Aussparung (10b') hat, in welcher ein entsprechender Abschnitt des nachgiebigen Elements (11) untergebracht ist.

4. System nach Anspruch 2, **dadurch gekennzeichnet, dass** die axiale Aussparung (11b') des nachgiebigen Elements (11) ausgebildet ist wenigstens teilweise durch eine substantiell röhrenförmige innere Komponente (11b), die hergestellt ist aus starrem Material oder metallischem Material, welche umgeben ist durch das elastische Material (11c).

5. System nach Anspruch 4, **dadurch gekennzeichnet, dass** das nachgiebige Element (11) eine substantiell röhrenförmige äußere Komponente (11a) umfasst, welche aus starrem Material oder metallischem Material gebildet ist, in welcher wenigstens ein Teil der inneren Komponente (11b) sich erstreckt, wobei die äußere Komponente (11a) festgehalten ist in Bezug auf die innere Komponente (11b) über das elastische Material (11c).

6. System nach Anspruch 3 und 5, **dadurch gekennzeichnet, dass** die äußere Komponente (11a) des nachgiebigen Elements (11) mit Presspassung in die axiale Aussparung (11b') des Trägers (10) eingepasst ist.

7. System nach Anspruch 1, **dadurch gekennzeichnet, dass** das elastische Material (11c) des nachgiebigen Elements (11) sich dazwischen erstreckt und sich in Kontakt befindet mit dem Träger (10) und dem starren Element (9).

8. System nach Anspruch 1, **dadurch gekennzeichnet, dass** in dem elastischen Material (11) wenigstens teilweise eine axial sich erstreckende, aussteifende Komponente (11d) eingelassen ist, teilweise in rohrförmiger Gestalt und hergestellt aus metallischem Material.

9. System nach Anspruch 1, **dadurch gekennzeichnet, dass** das nachgiebige Element (11) so strukturiert ist, dass es erheblich leichter elastisch verformbar in axialer Richtung ist als in radialer Richtung.

10. System nach Anspruch 1, **dadurch gekennzeichnet, dass** das starre Glied (9) festgehalten ist durch eine Mehrzahl von nachgiebigen Komponenten (11), wobei jede gebildet ist wenigstens mit einem elastischen Material (11c) und festgehalten wird in Bezug auf den Träger (10).

11. System nach Anspruch 1, **dadurch gekennzeichnet, dass** das starre Glied (9) wenigstens eine Abschlussoberfläche (9a", 9b") umfasst, welche mit dem nachgiebigen Element (11) zusammenarbeitet für den Zweck des Fixierens von ersterem zu letzterem.

12. System nach Anspruch 1, **dadurch gekennzeichnet, dass** das starre Glied (9) gebildet ist aus wenigstens zwei Teilen (9a, 9b), die axial zueinander verbunden sind, insbesondere durch Mittel des Verbindens mit einem inneren Gewinde- zu einem äußeren Gewindetypus (9a', 9b').

13. System nach Anspruch 12, **dadurch gekennzeichnet, dass** jedes Teil (9a, 9b) des starren Teils (9) umschließt eine Abschlussoberfläche (9a", 9b"), die mit einander zusammenarbeiten in Bezug auf die entsprechenden längsseitigen Enden von einer starren Komponente (11b) des nachgiebigen Elements (11).

14. System nach wenigstens Anspruch 1, **dadurch gekennzeichnet, dass** jedes Ende des starren Gliedes (9) verbunden ist in einer gelenkartigen Verbindung mit dem ersten Ende eines entsprechenden zylinderartigen Stoßdämpfers (7a), vorzugsweise ausgerüstet mit einer koaxialen schraubenförmigen Feder (7b), die in zusammengedrückter Weise arbeitet.

15. System nach Anspruch 14, **dadurch gekennzeichnet, dass** die Baugruppe (5) von jedem Rad (2, 3) einen oszillierenden Arm (5b) umfasst, zu welchem ein zweites Ende eines entsprechenden zylinderartigen Stoßdämpfers (7a) verbunden ist in einer beweglichen Weise.

16. System nach Anspruch 15, **dadurch gekennzeichnet, dass** Endbegrenzungsmittel (13) für die Bewegung des oszillierenden Armes (5b) integriert sind in dem zylinderartigen Stoßdämpfer (7).

17. System nach Anspruch 1, **dadurch gekennzeichnet, dass** das starre Glied (9) umfasst entsprechende Endbegrenzungsstücke (14, 15), die im Besonderen wenigstens ein Stück eines starren Glieds (14) umfassen, das ein elastisch deformierbares Dämpferelement (15) trägt.

18. System nach Anspruch 1, **dadurch gekennzeichnet, dass** mit dem Träger (10) verbunden sind Führungsmittel (12), um die axiale Bewegung des starren Glieds (9) zu führen.

## Revendications

1. Système de suspensions pour un véhicule (1), en particulier de petites dimensions et avec une petite base de roue pour le transport urbain, ayant un corps (2) et quatre roues (3, 4) associées au corps (2), le système de suspensions comprenant :
un ensemble oscillant (5) pour chaque roue (3, 4), chaque ensemble (5) permettant à la roue (3, 4) respective de réaliser un mouvement sensiblement vertical par rapport au corps (2) ; et
un dispositif d'interconnexion (8), qui raccorde les uns aux autres les ensembles (5) de la roue avant (3) et de la roue arrière (4) à un seul et même côté du véhicule (1), le dispositif d'interconnexion (8) comprenant au moins un élément rigide (9) de préférence en forme de tige, s'étendant longitudinalement, au moins un composant élastique (11) et un support (10) respectif raccordé au corps (2) du véhicule (1),
dans lequel ledit au moins un composant élastique (11) est agencé pour permettre les déplacements contrôlés de l'élément rigide (9), afin de transmettre une charge provenant du mouvement de l'ensemble oscillant (5) de l'une des roues (3, 4) d'un côté du véhicule (1) à l'ensemble oscillant (5) de l'autre roue du même côté du véhicule,
**caractérisé en ce que** ledit élément rigide (9) est rendu fixe dans son étirement intermédiaire sur ledit au moins un élément élastique (11) afin d'éviter le coulissement et le frottement entre eux,
ledit au moins un composant élastique (11) est à son tour fixé sur le support (10) respectif afin d'éviter le coulissement et le frottement entre eux, et
ledit au moins un composant élastique (11) est formé au moins partiellement avec un matériau élastique (11c), de sorte que lesdits déplacements contrôlés de l'élément rigide (9) sont autorisés via la déviation dudit matériau élastique (11c), en l'absence du coulissement et du frottement entre ledit élément rigide (9) et ledit au moins un composant élastique (11) et entre ledit au moins un composant élastique (11) et le support (10) respectif.

2. Système selon la revendication 1, **caractérisé en ce que** l'élément élastique (11) a une cavité axiale (11 b'), dans laquelle une partie intermédiaire respective de l'élément rigide (9) est logée.

3. Système selon la revendication 1, **caractérisé en ce que** le support (10) a une cavité axiale (10b') dans laquelle une partie respective de l'élément élastique (11) est logée.

4. Système selon la revendication 2, **caractérisé en ce que** la cavité axiale (11 b') de l'élément élastique (11) est formée au moins en partie par un composant interne (11 b) sensiblement tubulaire réalisé avec un matériau rigide ou métallique, qui est entouré par un matériau élastique (11c).

5. Système selon la revendication 4, **caractérisé en ce que** l'élément élastique (11) comprend un composant périphérique (11a) sensiblement tubulaire réalisé avec un matériau rigide ou métallique, à l'intérieur duquel au moins en partie, le composant interne (11b) s'étend, le composant périphérique (11a) étant rendu fixe sur le composant interne (11b) via le matériau élastique (11c).

6. Système selon les revendications 3 et 5, **caractérisé en ce que** le composant périphérique (11a) de l'élément élastique (11) est ajusté de manière serrée dans la cavité axiale (10b') du support (10).

7. Système selon la revendication 1, **caractérisé en ce que** le matériau élastique (11 c) de l'élément élastique (11) s'étend entre, et est en contact avec le support (10) et l'élément rigide (9).

8. Système selon la revendication 1, **caractérisé en ce que** dans le matériau élastique (11c), on trouve au moins partiellement enfoncé, un composant de renforcement (11d) étendu de manière axiale, en particulier de forme tubulaire et réalisé avec un matériau métallique.

9. Système selon la revendication 1, **caractérisé en ce que** l'élément élastique (11) est structuré pour être plus facilement élastiquement déformable dans la direction axiale que dans la direction radiale.

10. Système selon la revendication 1, **caractérisé en ce que** l'élément rigide (9) est rendu fixe sur une pluralité de composants élastiques (11), chacun formé au moins partiellement avec un matériau élastique (11 c) et rendu fixe sur le support (10).

11. Système selon la revendication 1, **caractérisé en ce que** l'élément rigide (9) comprend au moins une surface de butée (9a", 9b") coopérant avec l'élément élastique (11) afin de fixer le premier sur le dernier.

12. Système selon la revendication 1, **caractérisé en ce que** l'élément rigide (9) est formé en au moins deux parties (9a, 9b) couplées axialement entre elles, en particulier au moyen d'un couplage d'un type à filetage interne - filetage externe (9a', 9b').

13. Système selon la revendication 12, **caractérisé en ce que** chaque partie (9a, 9b) de l'élément rigide (9) comprend une surface de butée (9a", 9b") coopérant avec une extrémité longitudinale respective d'un composant rigide (11b) de l'élément élastique (11).

14. système selon au moins la revendication 1, **caractérisé en ce que** chaque extrémité de l'élément rigide (9) est raccordée d'une manière articulée à une première extrémité d'un amortisseur de type cylindrique (7a) respectif, de préférence équipé avec un ressort hélicoïdal coaxial (7b) fonctionnant en compression.

15. Système selon la revendication 14, **caractérisé en ce que** l'ensemble (5) de chaque roue (3, 4) comprend un bras oscillant (5b), auquel une seconde extrémité d'un amortisseur (7a) de type cylindrique respectif est raccordée d'une manière articulée.

16. Système selon la revendication 15, **caractérisé en ce que** l'on prévoit des moyens de fin de déplacement (13) du mouvement du bras oscillant (5b), intégrés dans l'amortisseur (7) de type cylindrique.

17. Système selon la revendication 1, **caractérisé en ce que** l'élément rigide (9) comprend des moyens de fin de déplacement (14, 15) respectifs, comprenant en particulier au moins une partie de l'élément rigide (14) qui supporte un élément tampon (15) élastiquement déformable.

18. Système selon la revendication 1, **caractérisé en ce qu'**associés au support (10), on trouve des moyens de guidage (12) pour guider le mouvement axial de l'élément rigide (9).
